# EUROPÄISCHE PATENTSCHRIFT

(11) **EP 3 690 230 B1**
(45) Veröffentlichungstag und Bekanntmachung des Hinweises auf die Patenterteilung: **16.11.2022**
(21) Anmeldenummer: 19154511.0
(22) Anmeldetag: 30.01.2019
(51) Int. Cl.: F03D 1/06

(54) **VORTEX-GENERATOR MIT EINER EINZIGEN FINNE**
VORTEX GENERATOR WITH A SINGLE FIN
GÉNÉRATEUR DE VORTEX DOTÉ DE PANNE SIMPLE

(43) Veröffentlichungstag der Anmeldung: 05.08.2020
(73) Patentinhaber: Nordex Energy SE & Co. KG, 22419 Hamburg (DE)
(72) Erfinder: Lipka, Thomas, 18055 Rostock (DE)
(74) Vertreter: Hauck Patentanwaltspartnerschaft mbB

(56) Entgegenhaltungen:
- EP-A1- 3 029 317
- EP-A1- 3 051 125
- WO-A1-2015/053768
- DE-A1-102016 217 139
- US-A- 2 764 373

## Beschreibung

Die Erfindung betrifft einen Vortex-Generator, der eine einzige Finne und eine Grundplatte aufweist und zur Befestigung an einem Windenergieanlagenrotorblatt vorgesehen ist. Vortex-Generatoren, gelegentlich auch als Wirbelerzeuger bezeichnet, werden bei Windenergieanlagenrotorblättern für eine gezielte Beeinflussung der Strömungsverhältnisse eingesetzt. Einige Vortex-Generatoren weisen eine einzige Finne, andere zwei in einem Abstand voneinander angeordnete Finnen auf. Die Finnen ragen von der Oberfläche des Rotorblatts in eine Grenzschicht der Strömung hinein und sind in einem Winkel zur Anströmrichtung ausgerichtet. Sind diese Finnen im Betrieb des Rotorblatts der anströmenden Luft ausgesetzt, führt dies zur Ausbildung von energiereichen Wirbeln und stromabwärts des Vortex-Generators zu einer turbulenten Grenzschicht. Insbesondere im Blattwurzelbereich hat es sich in vielen Fällen als sinnvoll herausgestellt, diesen Effekt zur Vermeidung oder Verzögerung von Strömungsablösungen einzusetzen. Hierzu müssen die Vortex-Generatoren an geeigneten Positionen auf der Blattoberfläche befestigt werden. Dies geschieht in der Regel durch Aufkleben.

Diese Art der Befestigung der Vortex-Generatoren begegnet erheblichen Schwierigkeiten. Grundsätzlich bestehen hohe Anforderungen an die Qualität der Befestigung, denn im Betrieb sind die Rotorblätter von Windenergieanlagen jahrelang Wind und Wetter ausgesetzt und für Wartungs- und Reparaturarbeiten schwer zugänglich. Hinzu kommt, dass die Oberfläche der Rotorblätter eine dreidimensionale Krümmung aufweist, die sich sowohl in Richtung der Blatttiefe, also von der Profilnasenkante zur Profilendkante hin, als auch in Längsrichtung des Rotorblatts, also von der Blattwurzel zur Blattspitze hin, fortwährend ändern kann.

Eine individuelle Anpassung jedes Vortex-Generators an die an der Position seiner vorgesehenen Befestigung bestehende Krümmung der Oberfläche des Rotorblatts ist kaum praktikabel. Darum wird als Befestigungsfläche der Vortex-Generatoren eine ebene Fläche oder eine Fläche mit einer mittleren Krümmung gewählt. Die unvermeidlichen Spalte müssen mit Klebstoff aufgefüllt werden. Hierfür ist ein relativ dünnflüssiger Klebstoff erforderlich, der eine geringe Anfangshaftung aufweist, sodass jeder Vortex-Generator fixiert werden muss, bis der Klebstoff eine ausreichende Haftung bietet. Klebebänder stellen eine Alternative dar, sind zum Ausgleich unterschiedlicher Spaltmaße jedoch nur sehr bedingt geeignet sind. Die Montage der Vortex-Generatoren ist daher aufwendig und fehleranfällig. In der Praxis ist immer wieder zu beobachten, dass sich einzelne Vortex-Generatoren von der Oberfläche lösen und schließlich abfallen.

Aus der Druckschrift EP 2 484 898 B1 sind Vortex-Generatoren mit zwei Finnen und einer gekrümmten Befestigungsfläche zum Aufkleben auf die Oberfläche eines Windenergieanlagenrotorblatts bekannt geworden. Die Befestigungsfläche umfasst eine großflächige Aussparung, in der der Klebstoff angeordnet werden soll, und einen umlaufenden Rand, der die Klebstoffschicht vor äußeren Einflüssen schützen soll.

Aus der Druckschrift EP 2 799 709 B1 ist bekannt geworden, Vortex-Generatoren mit einer Klebstoffschicht an einer Oberfläche eines Windenergieanlagenrotorblatts zu befestigen. Die Klebstoffschicht soll ein niedriges Schermodul aufweisen, um eine Ablösung der Vortex-Generatoren bei einer Verformung des Rotorblatts zu vermeiden. In einem Ausführungsbeispiel weisen die Vortex-Generatoren eine einzige Finne und eine rechteckige Grundplatte auf.

Aus der Druckschrift EP 2 826 708 B1 sind Vortex-Generatoren bekannt geworden, die mit Klebebändern an einer Oberfläche eines Windenergieanlagenrotorblatts befestigt werden. Die Vortex-Generatoren sollen flexibel sein, damit sich eine Befestigungsfläche der Vortex-Generatoren an die Kontur des Rotorblatts anpassen kann. Aus der Druckschrift WO 2015/030573 A1 sind Vortex-Generatoren mit zwei Finnen bekannt geworden, die über eine Grundplatte miteinander verbunden sind. Die Finnen weisen eine leichte Krümmung auf, was eine Flexibilität der Grundplatte erhöhen und eine Anpassung der Grundplatte an unterschiedliche Krümmungen der Oberfläche des Rotorblatts ermöglichen soll. Außerdem wird vorgeschlagen, die Grundplatte U-, V-, oder W-förmig auszubilden. Diese Maßnahme soll eine thermische Ausdehnung ermöglichen und zugleich aerodynamisch vorteilhaft sein.

Aus der Druckschrift WO 2018/046594 A1 ist ein Verfahren zum Befestigen von Vortex-Generatoren bekannt geworden, bei dem zwischen einer Grundplatte eines Vortex-Generators und der Oberfläche eines Windenergieanlagenrotorblatts ein Unterdruck erzeugt wird, um den Vortex-Generator während des Aushärtens eines Klebstoffs an die Oberfläche zu pressen. In einem Ausführungsbeispiel weist der Vortex-Generator eine einzige Finne und eine trapezförmige Grundplatte auf.

Aus der Druckschrift DE 10 2016 217 139 A1 ist ein Vortex-Generator bekannt geworden, der stromaufwärts einer Dachöffnung eines Kraftfahrzeugs angeordnet ist. Der bekannte Vortex-Generator ist an einem Fuß befestigt, der in einer speziell geformten Ausnehmung im Fahrzeugdach drehbar gelagert ist.

Aus der Druckschrift US 2,764,373 A ist ein beheizbarer Vortex-Generator für eine Flugzeugtragfläche bekannt geworden. Er ist an einem durch eine Außenhaut der Flugzeugtragfläche hindurchgeführten Bolzen befestigt.

Aus der Druckschrift WO 2015/053768 A1 ist ein Vortex-Generator mit den Merkmalen des Oberbegriffs des Anspruchs 1 bekannt geworden. Die Grundplatte des bekannten Vortex-Generators ist in einem mehrteiligen Sockel drehbar gelagert, so dass ein Anstellwinkel des Vortex-Generators verstellt werden kann.

Davon ausgehend ist es die Aufgabe der Erfindung, einen Vortex-Generator mit einer Grundplatte und einer einzigen Finne zur Verfügung zu stellen, der besonders einfach und zuverlässig an einer Oberfläche eines Windenergieanlagenrotorblatts befestigt werden kann.

Diese Aufgabe wird gelöst durch den Vortex-Generator mit den Merkmalen des Anspruchs 1. Vorteilhafte Ausgestaltungen sind in den Unteransprüchen angegeben.

Der Vortex-Generator hat eine einzige Finne, die in einer Längsrichtung ausgerichtet ist und sich in der Längsrichtung über eine erste Länge erstreckt, und eine Grundplatte, die sich in der Längsrichtung über eine zweite Länge erstreckt, wobei die zweite Länger kleiner ist als die erste Länge.

Um die gewünschte Beeinflussung der Strömungsverhältnisse zu erzielen, wird der Vortex-Generator so an einer Oberfläche des Windenergieanlagenrotorblatts befestigt, dass die Längsrichtung in einem Winkel zur sogenannten Auslegungsanströmrichtung angeordnet ist. Die Auslegungsanströmrichtung verläuft dabei im Wesentlichen in einer Profilebene des Rotorblatts. Nachfolgend wird die zu einer Profilnasenkante des Rotorblatts weisende Richtung als "vorn", die zu einer Profilendkante weisende Richtung als "hinten" bezeichnet. In ähnlicher Weise bezieht sich die Angabe "unten" auf die zu der Oberfläche des Rotorblatts weisende Richtung und die Angabe "oben" auf die sich von dieser Oberfläche entfernende Richtung.

Die Finne erstreckt sich ausgehend von der Grundplatte nach oben, insbesondere etwa orthogonal zur Grundplatte bzw. zur Oberfläche des Windenergieanlagenrotorblatts. Sie kann jedoch auch davon abweichend mehr oder weniger stark geneigt zu der Oberfläche bzw. zu der Grundplatte angeordnet sein. Eine Fläche, in der die Finne angeordnet ist, kann eben oder leicht gekrümmt sein. Die Finne weist eine Höhe auf, die an die Dicke einer Grenzschicht der Strömung angepasst sein kann. Insbesondere kann die Höhe etwas größer sein als die Dicke der Grenzschicht. Die Finne kann über ihre gesamte Länge eine gleichmäßige Höhe aufweisen. Alternativ kann die Höhe über die Längsrichtung variieren. Gebräuchlich sind insbesondere Vortex-Generatoren, deren Höhe an einem vorderen Ende geringer ist als einem hinteren Ende. In diesem Fall kann die Finne im Wesentlichen trapezförmig bzw. dreieckig ausgebildet sein. Abweichungen davon sind möglich, sowohl mit gekrümmt verlaufenden Vorder-, Hinter-, Ober- und/oder Unterkanten, als auch mit mehr oder weniger stark abgerundeten Ecken. Die Finne kann orthogonal zu ihrer Längsrichtung etwa mittig auf der Grundplatte angeordnet sein. Die Grundplatte kann insbesondere spiegelsymmetrisch zu der Finne ausgebildet sein.

Typische Abmessungen der Finne liegen beispielsweise in einem Bereich zwischen einer Länge von 4 cm und einer Länge von 25 cm, wobei die Höhe der Finne beispielsweise in einem Bereich zwischen 20 % und 100 % der Länge liegen kann. Die Grundplatte oder der gesamte Vortex-Generator kann aus einem relativ steifen, unflexiblen Material wie beispielsweise Metall bestehen. Kunststoff oder ein Faserverbundmaterial stellen Alternativen dar. Der Vortex-Generator kann einteilig gefertigt oder aus mehreren Teilen zusammengesetzt sein.

Eine Besonderheit der Erfindung besteht darin, dass die Länge der Grundplatte geringer ist als die Länge der Finne, dass sich mit anderen Worten die Grundplatte also in der Längsrichtung nicht über die gesamte Länge der Finne erstreckt. Dadurch verringern sich die zwischen der Grundplatte und der Oberfläche des Rotorblatts bei veränderlicher Krümmung der Oberfläche auftretenden Spaltmaße. Der Erfinder hat erkannt, dass die auftretenden Spaltmaße bei einer hinreichend kurzen Grundplatte so weit verkleinert werden können, dass sie zum Beispiel durch die Elastizität eines doppelseitigen Klebebands ausgeglichen werden können. Beispielsweise können Klebebänder mit einer Stärke von 1,5 mm eingesetzt werden, die aufgrund ihrer Elastizität einen Ausgleich bis zu etwa 25 % ihrer Dicke herbeiführen können. Wird die Grundplatte soweit verkürzt, dass sich die Größe der an den unterschiedlichen Befestigungspositionen auftretenden Spalte um nicht mehr als etwa 0,375 mm ändert, ist demnach eine zuverlässige und besonders einfache Befestigung mit einem solchen Klebeband möglich. Vorteile ergeben sich jedoch auch bei Verwendung anderer Klebstoffe.

In einer Ausgestaltung beträgt die zweite Länge höchstens 80% der ersten Länge. Die zweite Länge kann auch höchstens 70 %, höchstens 60 %, höchstens 50 %, höchstens 40 %, höchstens 30 % oder höchstens 20 % der ersten Länge betragen. Durch diese Maßnahme ist eine weitere Verringerung der auftretenden Spaltmaße möglich, sodass eine zuverlässige Befestigung auch bei großen Vortex-Generatoren gelingt. Versuche haben gezeigt, dass die Größe der verbleibenden Befestigungsfläche trotz der Verkürzung in vielen Fällen ausreichend ist.

Bei der Erfindung weist die Finne einen an die Grundplatte angrenzenden ersten Längsabschnitt sowie einen sich an den ersten Längsabschnitt anschließenden, zweiten Längsabschnitt auf, der über die Grundplatte übersteht. Die beiden Längsabschnitte können in einer Ebene liegen. Der erste Längsabschnitt grenzt an die Grundplatte an, kann also damit verbunden sein oder bei einteiliger Fertigung von Grundplatte und Finne in die Grundplatte übergehen. Der zweite Längsabschnitt steht über die Grundplatte über, ist also nicht unmittelbar mit der Grundplatte verbunden.

In einer Ausgestaltung weist die Finne eine in der Längsrichtung variierende Höhe auf, wobei die Höhe in dem ersten Längsabschnitt kleiner ist als in dem zweiten Längsabschnitt. Insbesondere kann die Finne eine dreieck- oder trapezförmige Grundform aufweisen. Die Höhe kann von einem vorderen Ende der Finne zu einem hinteren Ende der Finne ansteigen, insbesondere entlang einer Schräge. Im ersten Längsabschnitt wird durch das Angrenzen an die Grundplatte trotz der kleineren Höhe eine ausreichende Stabilität erreicht. Der zweite Längsabschnitt kann aufgrund seiner größeren Höhe eine ausreichende Stabilität aufweisen, obwohl er nicht durch die Grundplatte unterstützt ist.

In einer Ausgestaltung weist die Finne einen dritten Längsabschnitt auf, der sich an dem vom zweiten Längsabschnitt entfernten Ende des ersten Längsabschnitts an den ersten Längsabschnitt anschließt und der ebenfalls über die Grundplatte übersteht. In diesem Fall können alle drei Längsabschnitte in einer Ebene liegen. Nur der erste, mittlere Längsabschnitt ist unmittelbar mit der Grundplatte verbunden oder geht bei einteiliger Fertigung von Finne und Grundplatte in diese über. Eine Anordnung der Grundplatte in einem mittleren Abschnitt der Finne kann eine dauerhafte Befestigung des Vortex-Generators begünstigen.

In einer Ausgestaltung grenzt der erste Längsabschnitt entlang einer Linie an die Grundplatte an, wobei der zweite Längsabschnitt und/oder der dritte Längsabschnitt eine untere Kante aufweist, die gekrümmt und/oder in einem Winkel zu der Linie angeordnet ist. Die Linie, entlang der der erste Längsabschnitt an die Grundplatte angrenzt, kann gerade oder gekrümmt sein. Die Unterkanten des zweiten und/oder dritten Längsabschnitts können sich glatt an die Linie anschließen oder unter Ausbildung eines Winkels. Sie können auch relativ zu der Linie versetzt angeordnet sein, insbesondere nach unten.

In einer Ausgestaltung weist der erste Längsabschnitt an seiner unteren Kante und/oder der dritte Längsabschnitt an seiner unteren Kante einen abgewinkelten Randabschnitt auf. Dieser bewirkt eine Versteifung der Finne. Er kann durch Abwinkeln des Randabschnitts hergestellt werden, zum Beispiel bei einer Fertigung der Finne aus Blech. Er kann jedoch auch in einem Urformverfahren in abgewinkelter Anordnung hergestellt werden, beispielsweise bei einer Fertigung der Finne oder des gesamten Vortex-Generators aus Kunststoff in einem Spritzgießverfahren.

Bei der Erfindung weist die Grundplatte eine Oberseite auf, an der die Finne angeordnet ist, und eine Unterseite, an der eine Befestigungsfläche zur Befestigung an einem Windenergieanlagenrotorblatt angeordnet ist. Die Befestigungsfläche ist für eine Verklebung mit einer Oberfläche des Windenergieanlagenrotorblatts vorgesehen. Die Befestigungsfläche kann für die Verklebung vorbereitet sein, beispielsweise durch eine aktivierte Oberfläche. Die Befestigungsfläche kann sich wahlweise über die gesamte Unterseite der Grundplatte erstrecken oder über einen Teil davon, insbesondere über einen Großteil der Gesamtfläche der Unterseite.

In einer Ausgestaltung weist die Befestigungsfläche in der Längsrichtung eine Krümmung auf. Die Krümmung kann insbesondere konkav sein. Es kann sich insbesondere um eine mittlere Krümmung der für die Montage des Vortex-Generators vorgesehenen Oberflächenbereiche eines Windenergieanlagenrotorblatts handeln. Dadurch ist der Vortex-Generator an die für die Befestigung vorgesehenen Oberflächenbereiche gut angepasst und universell einsetzbar.

In einer Ausgestaltung ist auf die Befestigungsfläche ein doppelseitiges Klebeband aufgeklebt. Die Befestigung an der Oberfläche gelingt dann besonders einfach, nachdem eine Schutzschicht von der von der Befestigungsfläche abgewandten Seite des Klebebands entfernt wurde. Das Klebeband kann eine Dicke und eine Elastizität aufweisen, beispielsweise durch eine Schicht aus einem geschäumten Material. Die Dicke kann beispielsweise in einem Bereich von 0,5 mm bis 4 mm liegen. Dadurch ist eine flächige Verklebung bei unterschiedlich breiten Spaltmaßen zwischen Oberfläche des Windenergieanlagenrotorblatts und der Befestigungsfläche möglich.

In einer Ausgestaltung weist die Grundplatte eine umlaufende Dichtlippe auf, die nach unten über die Befestigungsfläche und/oder über das doppelseitige Klebeband übersteht. Die Dichtlippe kann insbesondere aus einem verformbaren Kunststoffmaterial bestehen und/oder an die Grundplatte angeformt sein. Die Dichtlippe kann verhindern, dass Schmutz und Feuchtigkeit zwischen Grundplatte und Oberfläche des Windenergieanlagenrotorblatts eindringen und so eine dauerhafte Befestigung sichern. Auf eine gesonderte Versiegelung kann verzichtet werden, was die Montage erheblich vereinfacht.

In einer Ausgestaltung weist die Grundplatte auf einer Seite der Finne eine geradlinige erste Kante auf, die in einem vorgegebenen Winkel im Bereich von 1° bis 40° zu der Längsrichtung ausgerichtet ist. Der vorgegebene Winkel kann dem gewünschten Winkel zwischen Längsrichtung und Anströmrichtung entsprechen. Bei der Befestigung des Vortex-Generators an einer Oberfläche eines Windenergieanlagenrotorblatts kann die erste Kante an einer Profilebene des Windenergieanlagenrotorblatts ausgerichtet werden, zum Beispiel anhand einer Markierung auf der Oberfläche des Windenergieanlagenrotorblatts oder mithilfe einer Schablone, die relativ zu dem Windenergieanlagenrotorblatt positioniert und an die die erste Kante angelegt wird. Dadurch vereinfacht sich die Montage des Vortex-Generators.

In einer Ausgestaltung weist die Grundplatte auf der anderen Seite der Finne eine zweite Kante auf, die bezüglich der Finne spiegelsymmetrisch zu der ersten Kante angeordnet ist. Anhand der zweiten Kante kann der Vortex-Generator wie zur ersten Kante beschrieben in einer gewünschten Winkelstellung zur Profilebene ausgerichtet werden. Er kann dadurch in zwei unterschiedlichen Stellungen montiert werden, nämlich in Winkeln von +/- dem vorgegebenen Winkel relativ zur Anströmrichtung/Profilebene. Insbesondere können die Vortex-Generatoren paarweise montiert werden, so dass die erste Kante eines Vortex-Generators parallel zur zweiten Kante eines benachbarten Vortex-Generators ausgerichtet ist. Insgesamt kann die Grundplatte insbesondere eine trapez- oder rautenförmige Grundform aufweisen, wobei die Ecken abgerundet sein können. Auch eine sechseckige Grundform ist möglich.

In einer Ausgestaltung weist die Grundplatte auf der anderen Seite der Finne eine dritte Kante auf, die parallel zu der ersten Kante angeordnet ist und/oder die Grundplatte weist auf der einen Seite der Finne eine vierte Kante auf, die parallel zu der zweiten Kante und/oder bezüglich der Finne spiegelsymmetrisch zu der dritten Kante angeordnet ist. Durch die dritte bzw. vierte Kante stehen bei der Ausrichtung des Vortex-Generators weitere Kanten zur Verfügung, die an eine Schablone oder Markierung angelegt werden können. Insbesondere kann bei einer paarweisen Anordnung zweier Vortex-Generatoren eine Schablone mit gleichmäßiger Breite zwischen der vierten Kante eines Vortex-Generators und der dritten Kante eines benachbarten Vortex-Generators positioniert werden. Bei einer insgesamt rautenförmigen Grundplatte bilden die vier Kanten jeweils eine Seite der Raute. Bei einer insgesamt sechseckigen Grundplatte gibt es zusätzliche Kanten, die senkrecht zur Längsrichtung angeordnet sein können.

In einer Ausgestaltung ist der Vortex-Generator mit einem Windenergieanlagenrotorblatt kombiniert, wobei die Grundplatte des Vortex-Generators mit einer Oberfläche des Windenergieanlagenrotorblatts verklebt ist. Dabei kann die Längsrichtung in einem vorgegebenen Winkel zu einer Profilebene angeordnet sein, wie vorstehend erläutert.

Nachfolgend wird die Erfindung anhand von in Figuren dargestellten Ausführungsbeispielen näher erläutert. Es zeigen:
- Fig. 1: einen Vortex-Generator in einer perspektivischen Darstellung;
- Fig. 2: den Vortex-Generator aus Fig. 1 in Ansichten von oben, von der Seite und von vorn;
- Fig. 3: einen Vortex-Generator in einer weiteren Ausgestaltung;
- Fig. 4: den Vortex-Generator aus Fig. 1 mit einem doppelseitigen Klebeband in einer Ansicht von unten;
- Fig. 5: den Vortex-Generator aus Fig. 1 mit einem anderen doppelseitigen Klebeband in einer Ansicht von unten;
- Fig. 6: einen Ausschnitt eines Windenergieanlagenrotorblatts mit vier aufgeklebten Vortex-Generatoren in einer Ansicht von oben.

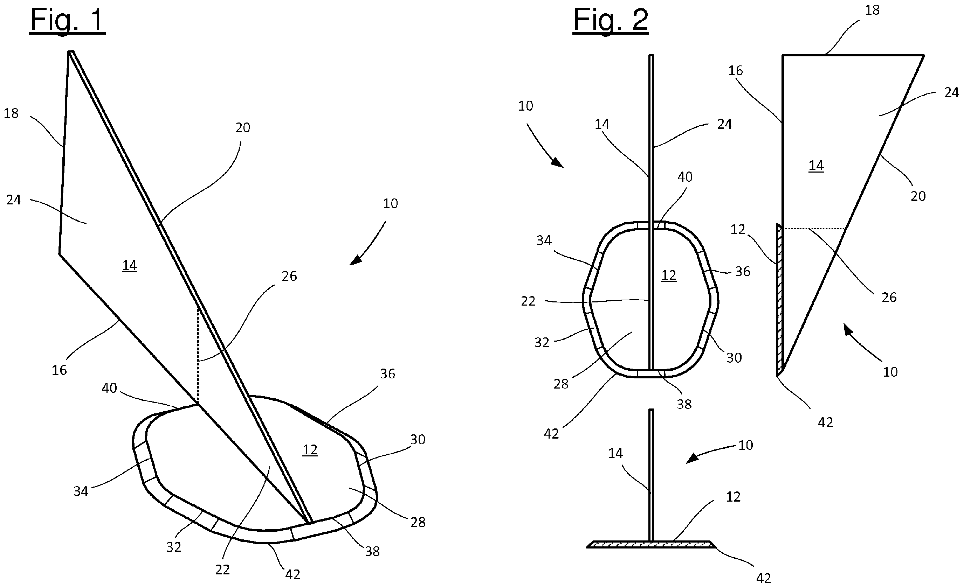

Figur 1 zeigt einen Vortex-Generator 10 mit einer Grundplatte 12 und einer einzigen Finne 14. Die Finne 14 ist in einer Ebene angeordnet und hat eine dreieckige Grundform mit einer Unterkante 16, einer dazu orthogonal ausgerichteten Hinterkante 18 und einer schräg angeordneten Oberkante 20. Die Längsrichtung der Finne 14 verläuft in Richtung der Unterkante 16. Die Höhe der Finne 14 wird senkrecht zur Grundplatte 12 betrachtet, hier in Richtung der Hinterkante 18. Die Höhe variiert über die Längsrichtung der Finne 14, beginnend mit einer Höhe von Null an einem vorderen Ende der Finne 14 bis zu einer maximalen Höhe an der Hinterkante 18.

Die Finne 14 weist einen ersten Längsabschnitt 22 und einen zweiten Längsabschnitt 24 auf, die an der nur der Veranschaulichung dienenden, punktierten Linie 26 aneinander angrenzen. Der erste Längsabschnitt 22 grenzt an die Grundplatte 12 an, der zweite Längsabschnitt 24 steht über die Grundplatte 12 über. Der erste Längsabschnitt 22 weist eine geringere maximale Höhe auf als der zweite Längsabschnitt 24. Die Finne 14 erstreckt sich von der dem Betrachter zugewandten Oberseite 28 der Grundplatte 12 aus in einem rechten Winkel zur Grundplatte 12 nach oben.

Die Grundplatte 12 hat eine sechseckige Grundform mit einer ersten Kante 30, die in einem Winkel von etwa 20° zur Längsrichtung der Finne 14 angeordnet ist. Bezüglich der Finne 14 der ersten Kante 30 gegenüberliegend weist die Grundplatte 12 eine zweite Kante 32 auf. Parallel zur ersten Kante 30 auf der gegenüberliegenden Seite der Finne 14 weist die Grundplatte 12 eine dritte Kante 34 auf. Die vierte Kante 36 ist bezüglich der Finne 14 spiegelsymmetrisch zur dritten Kante 34 angeordnet und verläuft parallel zur zweiten Kante 32. Die beiden übrigen Seiten des Sechsecks sind von zwei weiteren Kanten 38, 40 der Grundplatte 12 gebildet, die orthogonal zur Längsrichtung der Finne 14 angeordnet sind. Um den gesamten Rand der Grundplatte 12 läuft eine nach unten weisende Dichtlippe 42 um.

Figur 2 zeigt im oberen linken Teil eine Ansicht auf den Vortex-Generator 10 aus Fig. 1 von oben. In dieser Ansicht sind die beschriebene, sechseckige Form der Grundplatte 12 und die symmetrische Anordnung der Finne 14 besonders gut erkennbar.

Im oberen rechten Teil der Fig. 2 ist der Blick von der Seite aus auf den Vortex-Generator 10 gerichtet. Man erkennt besonders gut die dreickige Form der Finne 14 und den nach hinten über die Grundplatte 12 überstehenden zweiten Längsabschnitt 24 der Finne 14.

Im unteren Teil der Fig. 2 ist der Blick von vorn auf den Vortex-Generator 10 gerichtet. Man erkennt die orthogonale Ausrichtung der Finne 14 zu der Grundplatte 12.

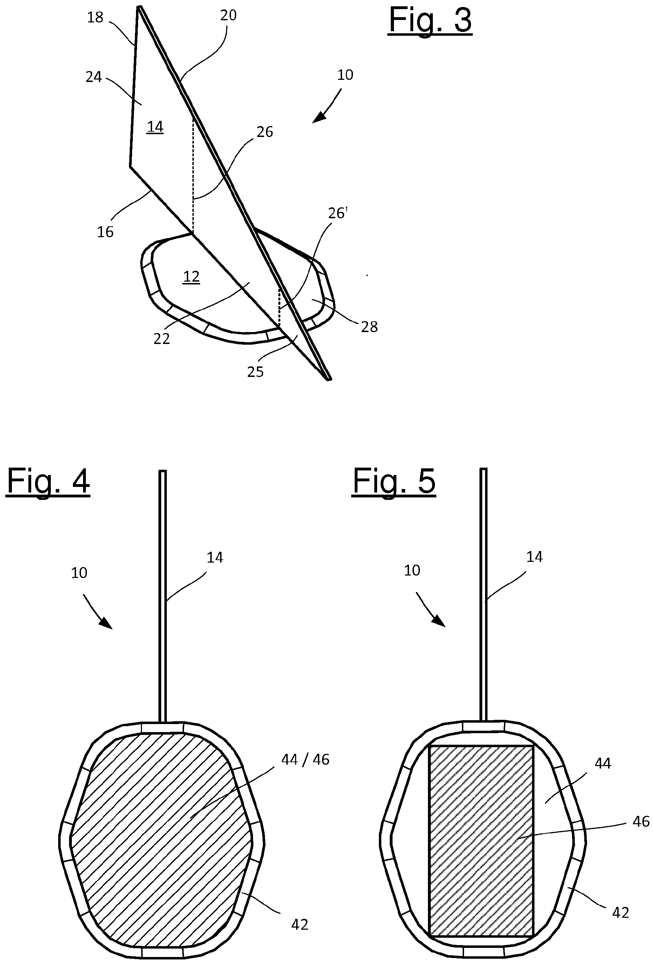

Fig. 3 zeigt einen Vortex-Generator 10 in einer Ausgestaltung, bei der die Finne 14 einen dritten Längsabschnitt 25 aufweist, welcher nach vorn über die Grundplatte 12 übersteht. Der dritte Längsabschnitt 25 grenzt an der punktierten Linie 26' an den ersten Längsabschnitt 22. Nur der erste, mittlere Längsabschnitt 22 ist unmittelbar mit der Grundplatte 12 verbunden oder geht bei einteiliger Fertigung von Finne 14 und Grundplatte 12 in diese über.

Figur 4 zeigt eine Ansicht des Vortex-Generators 10 aus Fig. 1 von unten. Man erkennt die an der von der Finne 14 abgewandten Unterseite der Grundplatte 12 angeordnete Befestigungsfläche 44, die vollflächig mit einem doppelseitigen Klebeband 46 bedeckt und von der Dichtlippe 42 umrandet ist.

In der Fig. 5 ist dieselbe Ansicht dargestellt wie in der Fig. 4. Einziger Unterschied ist, dass das doppelseitige Klebeband 46 kleiner und rechteckig ausgeführt ist, so dass es die Befestigungsfläche 44 nur teilweise ausfüllt.

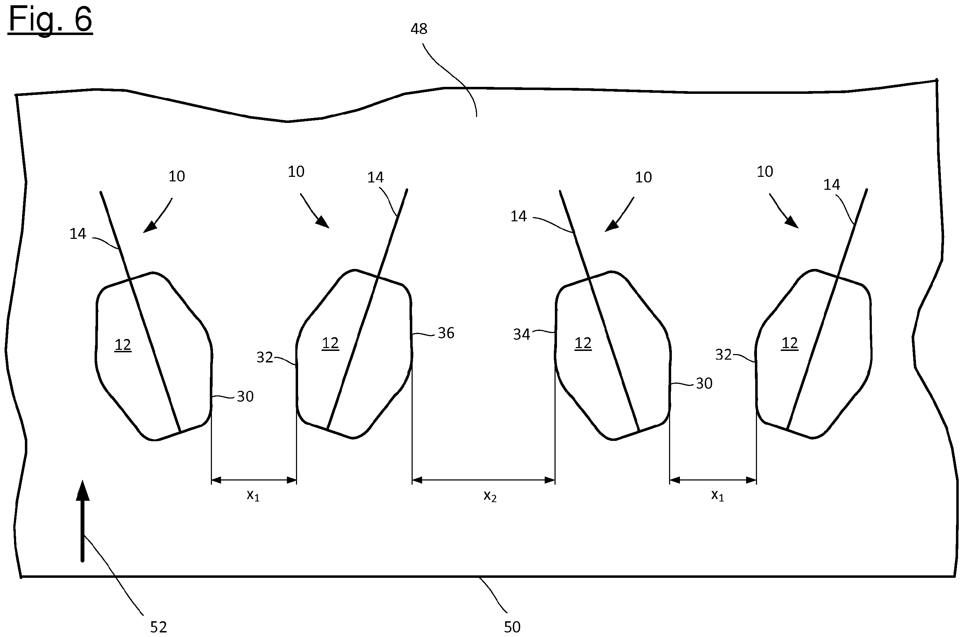

Figur 6 zeigt eine Draufsicht auf einen Ausschnitt eines Windenergieanlagenrotorblatts mit vier aufgeklebten Vortex-Generatoren 10 gemäß Fig. 1. Der dargestellte Ausschnitt zeigt die Profilnasenkante 48 und einen Teil der sich daran nach hinten anschließenden Saugseite 50 des Windenergieanlagenrotorblatts. Die Anströmrichtung 52 im Betrieb des Windenergieanlagenrotorblatts wird durch einen Pfeil veranschaulicht, der in einer Profilebene des Windenergieanlagenrotorblatts liegt. Die Vortex-Generatoren 10 sind in zwei Paaren angeordnet, so dass die Längsrichtungen zweier benachbarter Finnen 14 um denselben Winkel, jedoch in entgegengesetzte Richtung relativ zu der Anströmrichtung 52 gedreht angeordnet sind. Wegen der vorstehend im Einzelnen beschriebenen, sechseckigen Ausführung der Grundplatten 12 sind dann eine erste Kante 30 eines Vortex-Generators 10 und eine zweite Kante 32 eines benachbarten Vortex-Generators 10 parallel zueinander in einem Abstand x₁ angeordnet. Zwischen den beiden Paaren von Vortex-Genratoren 10 gibt es einen Abstand x₂, der ebenfalls zwischen zwei parallel angeordneten Kanten ausgebildet ist, nämlich zwischen einer vierten Kante 36 des in der Fig. 6 zweiten Vortex-Generators 10 von links und der dritten Kante 34 des in der Fig. 6 zweiten Vortex-Generators 10 von rechts.

### Liste der Bezugszeichen

- 10: Vortex-Generator
- 12: Grundplatte
- 14: Finne
- 16: Unterkante
- 18: Hinterkante
- 20: Oberkante
- 22: erster Längsabschnitt
- 24: zweiter Längsabschnitt
- 25: dritter Längsabschnitt
- 26, 26': Linie
- 28: Oberseite
- 30: erste Kante
- 32: zweite Kante
- 34: dritte Kante
- 36: vierte Kante
- 38: weitere Kante
- 40: weitere Kante
- 42: Dichtlippe
- 44: Befestigungsfläche
- 46: doppelseitiges Klebeband
- 48: Saugseite
- 50: Profilnasenkante
- 52: Anströmrichtung
- x₁: Abstand
- x₂: Abstand

## Patentansprüche

1. Vortex-Generator (10) zur Befestigung an einem Windenergieanlagenrotorblatt, wobei der Vortex-Generator (10) folgendes aufweist:
• eine einzige Finne (14), die in einer Längsrichtung ausgerichtet ist und sich in der Längsrichtung über eine erste Länge erstreckt, und
• eine Grundplatte (12), die sich in der Längsrichtung über eine zweite Länge erstreckt, wobei die zweite Länger kleiner ist als die erste Länge, wobei
• die Finne (14) einen an die Grundplatte (12) angrenzenden, mit der Grundplatte (12) verbundenen oder bei einteiliger Fertigung von Grundplatte und Finne in die Grundplatte (12) übergehenden, ersten Längsabschnitt (22) sowie einen sich an den ersten Längsabschnitt (22) anschließenden, zweiten Längsabschnitt (24) aufweist, der über die Grundplatte (12) übersteht, wobei
• die Grundplatte (12) eine Oberseite (28), an der die Finne (14) angeordnet ist, und eine Unterseite aufweist, **dadurch gekennzeichnet, dass** an der Unterseite eine Befestigungsfläche (44) zur Verklebung mit einem Windenergieanlagenrotorblatt angeordnet ist.

2. Vortex-Generator (10) nach Anspruch 1, **dadurch gekennzeichnet, dass** die zweite Länge höchstens 80% der ersten Länge beträgt.

3. Vortex-Generator (10) nach Anspruch 1 oder 2, **dadurch gekennzeichnet, dass** die Finne (14) eine in der Längsrichtung variierende Höhe aufweist, wobei die Höhe in dem ersten Längsabschnitt (22) kleiner ist als in dem zweiten Längsabschnitt (24).

4. Vortex-Generator (10) nach einem der Ansprüche 1 bis 3, **dadurch gekennzeichnet, dass** die Finne (14) einen dritten Längsabschnitt aufweist, der sich an dem vom zweiten Längsabschnitt (24) entfernten Ende des ersten Längsabschnitts (22) an den ersten Längsabschnitt (22) anschließt und der ebenfalls über die Grundplatte (12) übersteht.

5. Vortex-Generator (10) nach einem der Ansprüche 1 bis 4, **dadurch gekennzeichnet, dass** der erste Längsabschnitt (22) entlang einer Linie an die Grundplatte (12) angrenzt, wobei der zweite Längsabschnitt (24) und/oder der dritte Längsabschnitt eine untere Kante aufweist, die gekrümmt und/oder in einem Winkel zu der Linie angeordnet ist.

6. Vortex-Generator (10) nach einem der Ansprüche 1 bis 5, **dadurch gekennzeichnet, dass** der erste Längsabschnitt (22) und/oder der dritte Längsabschnitt an seiner unteren Kante einen abgewinkelten Randabschnitt aufweist.

7. Vortex-Generator (10) nach einem der Ansprüche 1 bis 6, **dadurch gekennzeichnet, dass** die Befestigungsfläche (44) in der Längsrichtung (12) eine Krümmung aufweist.

8. Vortex-Generator (10) nach einem der Ansprüche 1 bis 7, **dadurch gekennzeichnet, dass** auf die Befestigungsfläche (44) ein doppelseitiges Klebeband (46) aufgeklebt ist.

9. Vortex-Generator (10) nach einem der Ansprüche 1 bis 8, **dadurch gekennzeichnet, dass** die Grundplatte (12) einen umlaufende Dichtlippe (42) aufweist, die nach unten über die Befestigungsfläche (44) und/oder über das doppelseitige Klebeband (46) übersteht.

10. Vortex-Generator (10) nach einem der Ansprüche 1 bis 9, **dadurch gekennzeichnet, dass** die Grundplatte (12) auf einer Seite der Finne (14) eine geradlinige erste Kante (30) aufweist, die in einem vorgegebenen Winkel im Bereich von 1° bis 40° zu der Längsrichtung ausgerichtet ist.

11. Vortex-Generator (10) nach Anspruch 10, **dadurch gekennzeichnet, dass** die Grundplatte (12) auf der anderen Seite der Finne (14) eine zweite Kante (32) aufweist, die bezüglich der Finne (14) spiegelsymmetrisch zu der ersten Kante (30) angeordnet ist.

12. Vortex-Generator (10) nach Anspruch 11, **dadurch gekennzeichnet, dass** die Grundplatte (12) auf der anderen Seite der Finne (14) eine dritte Kante (34) aufweist, die parallel zu der ersten Kante (30) angeordnet ist, und/oder dass die Grundplatte (12) auf der einen Seite der Finne (14) eine vierte Kante (36) aufweist, die parallel zu der zweiten Kante (32) und/oder bezüglich der Finne (14) spiegelsymmetrisch zu der dritten Kante (34) angeordnet ist.

13. Windenergieanlagenrotorblatt mit einem Vortex-Generator (10) nach einem der Ansprüche 1 bis 12, dessen Grundplatte (12) mit einer Oberfläche (14) des Windenergieanlagenrotorblatts verklebt ist.

## Claims

1. Vortex generator (10) for attachment to a wind turbine rotor blade, the vortex generator (10) comprising:
• a single fin (14) aligned in a longitudinal direction and extending in the longitudinal direction for a first length, and
• a base plate (12) extending in the longitudinal direction for a second length, the second length being less than the first length, wherein
• the fin (14) has a first longitudinal section (22) adjoining the base plate (12), connected to the base plate (12) or merging into the base plate (12) when the base plate and fin are manufactured in one piece, and a second longitudinal section (24) adjoining the first longitudinal section (22) and projecting beyond the base plate (12), wherein
• the base plate (12) has an upper side (28), on which the fin (14) is arranged, and a lower side, **characterized in that** an attachment surface (44) for bonding to a wind turbine rotor blade is arranged on the lower side.

2. Vortex generator (10) according to claim 1, **characterized in that** the second length is at most 80% of the first length.

3. Vortex generator (10) according to claim 1 or 2, **characterized in that** the fin (14) has a height varying in the longitudinal direction, the height being smaller in the first longitudinal portion (22) than in the second longitudinal portion (24).

4. Vortex generator (10) according to any one of claims 1 to 3, **characterized in that** the fin (14) has a third longitudinal portion which joins the first longitudinal portion (22) at the end thereof remote from the second longitudinal portion (24) and which also projects beyond the base plate (12).

5. Vortex generator (10) according to any one of claims 1 to 4, **characterized in that** said first longitudinal portion (22) is adjacent to said base plate (12) along a line, said second longitudinal portion (24) and/or said third longitudinal portion having a lower edge which is curved and/or arranged at an angle to said line.

6. Vortex generator (10) according to any one of claims 1 to 5, **characterized in that** the first longitudinal section (22) and/or the third longitudinal section has an angled edge section at its lower edge.

7. Vortex generator (10) according to any one of claims 1 to 6, **characterized in that** the mounting surface (44) has a curvature in the longitudinal direction (12).

8. Vortex generator (10) according to any one of claims 1 to 7, **characterized in that** a double-sided adhesive tape (46) is adhered to the mounting surface (44).

9. Vortex generator (10) according to one of the claims 1 to 8, **characterized in that** the base plate (12) has a circumferential sealing lip (42) which projects downwards beyond the fastening surface (44) and/or beyond the double-sided adhesive tape (46).

10. Vortex generator (10) according to any one of claims 1 to 9, **characterized in that** the base plate (12) has on one side of the fin (14) a rectilinear first edge (30) oriented at a predetermined angle in the range of 1° to 40° to the longitudinal direction.

11. Vortex generator (10) according to claim 10, **characterized in that** the base plate (12) has a second edge (32) on the other side of the fin (14), which is arranged mirror-symmetrically with respect to the fin (14) to the first edge (30).

12. Vortex generator (10) according to claim 11, **characterized in that** the base plate (12) has on the other side of the fin (14) a third edge (34) which is arranged parallel to the first edge (30), and/or that the base plate (12) has on one side of the fin (14) a fourth edge (36) which is arranged parallel to the second edge (32) and/or with respect to the fin (14) mirror-symmetrical to the third edge (34).

13. A wind turbine rotor blade comprising a vortex generator (10) according to any one of claims 1 to 12, the base plate (12) of which is bonded to a surface (14) of the wind turbine rotor blade.

## Revendications

1. Générateur de vortex (10) destiné à être fixé à une pale de rotor d'éolienne, le générateur de vortex (10) comprenant :
une panne simple (14) orientée dans une direction longitudinale et s'étendant sur une première longueur dans la direction longitudinale, et
une plaque de base (12) s'étendant sur une deuxième longueur dans la direction longitudinale, la deuxième longueur étant inférieure à la première longueur, dans lequel
la panne (14) présente une première section longitudinale (22) adjacente à la plaque de base (12), reliée à la plaque de base (12) ou se confondant avec la plaque de base (12) dans le cas d'une conception monobloc de la plaque de base et de la panne, ainsi qu'une deuxième section longitudinale (24) prolongeant la première section longitudinale (22), laquelle fait saillie au-delà de la plaque de base (12), dans lequel
la plaque de base (12) présente une face supérieure (28) sur laquelle est disposée la panne (14), ainsi qu'une face inférieure, **caractérisé en ce qu'**une surface de fixation (44) destinée à être collée à une pale de rotor d'éolienne est disposée sur la face inférieure.

2. Générateur de vortex (10) selon la revendication 1, **caractérisé en ce que** la deuxième longueur mesure au maximum 80% de la première longueur.

3. Générateur de vortex (10) selon la revendication 1 ou 2, **caractérisé en ce que** la panne (14) présente une hauteur variable dans la direction longitudinale, dans lequel la hauteur est plus petite dans la première section longitudinale (22) que dans la deuxième section longitudinale (24).

4. Générateur de vortex (10) selon l'une des revendications 1 à 3, **caractérisé en ce que** la panne (14) présente une troisième section longitudinale, laquelle prolonge la première section longitudinale (22) à l'extrémité de la première section longitudinale (22) éloignée de la deuxième section longitudinale (24) et laquelle fait également saillie au-delà de la plaque de base (12).

5. Générateur de vortex (10) selon l'une des revendications 1 à 4, **caractérisé en ce que** la première section longitudinale (22) est adjacente à la plaque de base (12) le long d'une ligne, dans lequel la deuxième section longitudinale (24) et/ou la troisième section longitudinale présente une arête inférieure incurvée et/ou disposée selon un angle par rapport à la ligne.

6. Générateur de vortex (10) selon l'une des revendications 1 à 5, **caractérisé en ce que** la première section longitudinale (22) et/ou la troisième section longitudinale présente une section de bord coudée au niveau de son arête inférieure.

7. Générateur de vortex (10) selon l'une des revendications 1 à 6, **caractérisé en ce que** la surface de fixation (44) présente une incurvation dans la direction longitudinale (12).

8. Générateur de vortex (10) selon l'une des revendications 1 à 7, **caractérisé en ce qu'**un ruban adhésif double-face (46) est collé sur la surface de fixation (44).

9. Générateur de vortex (10) selon l'une des revendications 1 à 8, **caractérisé en ce que** la plaque de base (12) présente une lèvre d'étanchéité circonférentielle (42), laquelle fait saillie vers le bas au-delà de la surface de fixation (44) et/ou au-delà du ruban adhésif double-face (46).

10. Générateur de vortex (10) selon l'une des revendications 1 à 9, **caractérisé en ce que** sur un côté de la panne (14), la plaque de base (12) présente une première arête rectiligne (30), laquelle est orientée selon un angle prédéfini dans la plage de 1° à 40° par rapport à la direction longitudinale.

11. Générateur de vortex (10) selon la revendication 10, **caractérisé en ce que** sur l'autre côté de la panne (14), la plaque de base (12) présente une deuxième arête (32) disposée de façon symétrique à la première arête (30) par rapport à la panne (14).

12. Générateur de vortex (10) selon la revendication 11, **caractérisé en ce que** sur l'autre côté de la panne (14), la plaque de base (12) présente une troisième arête (34) disposée parallèlement à la première arête (30), et/ou **en ce que** sur un côté de la panne (14), la plaque de base (12) présente une quatrième arête (36) disposée parallèlement à la deuxième arête (32) et/ou de façon symétrique à la troisième arête (34) par rapport à la panne (14).

13. Pale de rotor d'éolienne dotée d'un générateur de vortex (10) selon l'une des revendications 1 à 12, dont la plaque de base (12) est collée à une surface (14) de la pale de rotor d'éolienne.
